(19) Europäisches Patentamt
European Patent Office
Office européen des brevets

(11) Veröffentlichungsnummer: **0 218 053**
**B1**

(12) **EUROPÄISCHE PATENTSCHRIFT**

(45) Veröffentlichungstag der Patentschrift: **30.05.90**

(21) Anmeldenummer: **86111380.1**

(22) Anmeldetag: **18.08.86**

(51) Int. Cl.$^5$: **C 08 G 18/10,** C 08 G 18/30, C 08 G 18/50, C 08 G 18/18, C 07 C 209/62, C 08 G 18/20

# (54) Verfahren zur Herstellung von Polyaminen.

(30) Priorität: **27.08.85 DE 3530476**

(43) Veröffentlichungstag der Anmeldung:
**15.04.87 Patentblatt 87/16**

(45) Bekanntmachung des Hinweises auf die Patenterteilung:
**30.05.90 Patentblatt 90/22**

(84) Benannte Vertragsstaaten:
**AT BE CH DE FR GB IT LI NL SE**

(56) Entgegenhaltungen:
**EP-A-0 039 834**
**EP-A-0 097 290**
**EP-A-0 097 298**
**DE-A-2 627 719**
**DE-A-3 023 202**
**FR-A-2 391 235**

(73) Patentinhaber: **BAYER AG**
**D-5090 Leverkusen 1 Bayerwerk (DE)**

(72) Erfinder: **Rasshofer, Werner, Dr.**
**Leopold-Gmelin-Strasse 31**
**D-5000 Koeln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 218 053 B1

**Beschreibung**

Die Erfindung betrifft ein vereinfachtes Einstufenverfahren zur Herstellung von Polyaminen mit aromatischen primären Aminogruppen, durch Hydrolyse von endständige Isocyanatgruppen aufweisenden Verbindungen mit einem NCO-Gehalt von 0,5 bis 40 Gew.-% mit äquivalenten oder überschüssigen Mengen Wasser in Gegenwart von Katalysatoren aus der Reihe der Amidin-und/oder Guanidin-Gruppen aufweisenden Verbindungen in Gegenwart von Lösungsmitteln wie Dimethylformamid bei vorzugsweise erhöhten Reaktionstemperaturen. Als Isocyanatgruppen aufweisende Verbindungen werden modifizierte Isocyanate oder NCO-Prepolymere bzw. Semiprepolymere eingesetzt. Die Hydrolyse führt unter Kohlendioxidabspaltung direkt zu den Polyaminen, die nach üblichen Methoden abgetrennt oder isoliert werden können.

Es ist bekannt, daß aromatische Isocyanate durch saure Hydrolyse in primäre aromatische Amine überführt werden können. Die Reaktion verläuft allerdings nur sehr unvollständig, da das bei der Hydrolyse gebildete Amin mit noch nicht umgesetztem Isocyanat zum entsprechenden Harnstoff weiterragiert. Diese Folgereaktion läßt sich auch durch Anwendung überschüssiger starker Mineralsäure nicht unterdrücken. Ein neueres Beispiel dieser Verfahrensweise findet sich in der JP—PS 55 007 829.

Gleichfalls ist bekannt, daß Isocyanate mit saurer oder basischer Katalyse in Amine umgewandelt werden können, wie es z.B. in N. V. Sidgwick, The Organic Chemistry of Nitrogen, Clarendon Press, Oxford, S. 326 (1966) sowie in J. March, Advanced Organic Chemistry: Reactions, Mechanisms and Structure, Mc Graw-Hill Book Co., New York, S. 658 (1968), belegt ist. Dabei gibt Sidgwick einen Hinweis auf die alkalische Hydrolysierbarkeit von NCO-Gruppen, der jedoch völlig unspezifisch und allgemein gehalten ist. J. March spricht allgemein davon, daß die Hydrolyse von Isocyanaten und Isothiocyanaten zu Aminen mit Säuren und Basen katalysiert werden kann. Dem Fachmann bekannt ist auch das intermediäre Auftreten von Isocyanaten, z.B. beim Curtius- oder Lossen-Abbau von Säureaziden und Hydroxamsäuren, und deren Zersetzung mit wäßriger Säure zu Aminsalzen. Ein solches präparatives Vorgehen ist, z.B. in Organic Sytheses, Coll. Vol. IV, 819 (1963) am Beispiel der Herstellung von Putrescin-Hydrochlorid beschrieben.

Von E. Mohr, J. prakt. Chem., *71*, 133 (1905) stammt die Beobachtung, daß Phenylisocyanat in der Kälte von verdünnter Natronlauge schneller angegriffen wird als von Wasser. Von C. Naegeli et al., Helv. Chim. Acta, *21*, 1100 (1938) wird berichtet, daß man aus mit Elektronen-Akzeptoren wie Nitrogruppen, Halogenatomen oder Acylgruppen substituierten Phenylisocyanaten durch Hydrolyse in feuchtem Ether oder 1% Wasser enthaltendem Aceton, also bei Abwesenheit von Säuren oder Basen, in wenigen Minuten bis zu 1 Stunde währender Umsetzung die entsprechenden Monoamine erhält. Aus 2,4-Dinitrophenylisocyanat erhält man das Amin auch ohne Solvens in heißem Wasser in praktisch 100%iger Ausbeute und ohne Nebenreaktion der Harnstoffbildung.

In der DE—B—1 270 046 wird ein Verfahren zur Herstellung definierter, Polyalkylenglykolether-Segmente enthaltender, primärer aromatischer Aminie beschrieben, bei dem man Umsetzungsprodukte von aromatischen Di- oder Triisocyanaten mit Polyalkylenglykolethern und/oder Polyalkylenglykolthioethern, vorzugsweise solchen mit Molekulargewichten zwischen 400 und 4000, mit sekundären oder tertiären Carbinolen umsetzt und anschließend (gegebenenfalls in Gegenwart saurer Katalysatoren) in einem inerten Lösungsmittel einer thermischen Spaltung bei hohen Temperaturen unterwirft. Nachteilig ist dabei neben der hohen Spalttemperatur, daß im Verlauf der thermischen Spaltung der Urethane brennbare, leicht flüchtige Alkene entstehen, die im Gemisch mit Luft explosiv sind, so daß entsprechende Vorsichtsmaßnahmen getroffen werden müssen.

Gegenstand der DE—B—1 694 152 ist die Herstellung von mindestens 2 endständige Aminogruppen aufweisenden Prepolymeren durch Umsetzung von Hydrazin, Aminophenylethylamin oder anderen Diaminen mit einem NCO-Prepolymer aus einem Polyetherpolyol und Polyisocyanat (NCO: NH-Verhältnis = 1:1,5 bis 1:5). Nicht umgesetztes Amin muß dabei in einem weiteren Schritt sorgfältig entfernt werden, da es die Umsetzung mit Polyisocyanaten stark katalysiert, so zu kurzen Verarbeitungszeiten führt und auch selbst als Reaktionspartner auftritt.

Eine andere Synthesemöglichkeit für Urethangruppen aufweisende Polyamine wird in der FR—PS—1 415 317 beschrieben. Urethangruppenhaltige NCO-Prepolymere werden mit Ameisensäure in die N-Formylderivate überführt, die zu endständigen aromatischen Aminen verseift werden. Auch die Reaktion von NCO-Prepolymeren mit Sulfaminsäure gemäß DE—P—1155 907 führt zu Verbindungen mit endständigen Aminogruppen. Desweiteren werden höhermolekulare, aliphatische, sekundäre und primäre Aminogruppen aufweisende Voraddukte nach DE—B—1 215 373 durch Umsetzung höhermolekularer Hydroxylverbindungen mit Ammoniak in Gegenwart von Katalysatoren unter Druck bei hohen Temperaturen erhalten oder sind gemäß US—PS—3 044 989 durch Umsetzung höhermolekularer Polyhydroxylverbindungen mit Acrylnitril unter anschließender katalyischer Hydrierung zugänglich. Auch durch Umsetzung von NCO-Prepolymeren mit Hydroxylgruppen aufweisenden Enaminen, Aldiminen oder Ketiminen und anschließende Hydrolyse erhält man gemäß DE—A—2 546 536 bzw. US—PS—3 865 791 höhermolekulare, endständige Verbindungen. Eine weitere Synthesemöglichkeit für Urethan- und Ethergruppen aufweisende aromatische Polyamine liegt in der bei der Reaktion von Isatosäureanhydrid und Diolen eintretenden Ringöffnung. Solche Polyamine sind z.B. beschrieben in der US—PS—4 180 644 und den DE—A—2 019 432, 2 619 840, 2 619 840, 2 648 774 und 2 648 825. Nachteilig für viele Zwecke ist die geringe Reaktivatät der solcherart erhaltenen, aromatischen Esteramine.

Geringe Reaktivität weisen auch die Amino- und Estergruppen enthaltenden Verbindungen auf, die nach US—P—4504648 durch Umsetzung von Polyetherpolyolen mit p-Aminobenzoesäureethylester und auch solche, die z.B. durch Umsetzung von Polyolen mit Nitrobenzoesäureethylester und nachfolgender Reaktion der Nitrogruppen zu Aminogruppen erhältlich sind.

Auch die Reaktion von Nitroarylisocyanaten mit Polyolen und nachfolgender Reduktion der Nitrogruppen zu aromatischen Amingruppen ist bekannt (US—PS—2 888 439).

Nachteilig sind hier vor allem die hohen Kosten des Reduktionsschrittes.

Es ist auch bekannt, daß gewisse heteroaromatische Isocyansäureester durch basische Hydrolyse in heteroaromatische Amine überführt werden können. Die bei H. John, J. Prakt. Chemie *130*, 314 f bzw. 332 f (1931) für zwei ganz bestimmte heteroaromatische Monoisocyansäureester genanten Hydrolysebedingungen sind aber für die Überführung von Poly-NCO-Verbindungen in aliphatische und/ oder aromatische Amine nicht nur völlig ungeeignet, sondern darüber hinaus auch gefährlich.

Gegenstand eigener Vorschläge nach den DE—A—29 48 419 und 30 39 600 sind mehrstufige Verfahren zur Herstellung von Polyaminen durch alkalische Hydrolyse von NCO-Voraddukten mittels überschüssiger Basenmengen (Alkalihydroxide) bei niedrigen Temperaturen zu Carbamaten, Ansäurern mit äquivalenten oder überschüssigen Mengen an Mineralsäuren oder sauren Ionenaustauscherharzen unter Carbamat-Zersetzung, gegebenenfalls Neutralisation überschüssiger Säuremengen mittels Basen und anschließende Isolierung der Polyamine.

In der DE—OS—3131252 wurde vorgeschlagen, die in einer ersten Stufe durch Hydrolyse mit Alkalihydroxiden hergestellten Carbamate durch anschließende thermische Behandlung zu zersetzen, um so zu Polyaminen zu gelangen.

Einstufenverfahren beschreiben die DE—OS—3 223 400, 3 223 398 und 3 223 397. Darin werden (DE—OS—3 223 400) "Etherlösungsmittel" zusammen mit tert. Aminen als Katalysatoren, polare Lösungsmittel (DE—OS—3 223 398) wie Dimethylformamid zusammen mit ≥ 0,1 Tln (auf 100 Tle Isocyanat-Verbindung) tert. Amin oder 0,1—10 g Alkalihydroxide, Alkalisilikate, Alkalicyanide als Katalysatoren und (DE—OS—3 223 397) in polaren Lösungsmitteln wie DMF 0,01—25 Gew.-% Carbonate oder Carboxylate als Katalysatoren verwendet.

Diese bekannten Verfahren zur Herstellung von Polyaminen sind alle aufwendig. Selbst bei den zuletzt genannten, bereits einfacheren Verfahren zur Umwandlung von Polisocyanaten in Polyamine wären noch weitere entscheidende Vereinfachungen wünschenswert, um zu Polyaminen in wirtschaftlich noch günstigerer Weise zu gelangen. Gegenüber herkömmlichen Verfahren sollten folgende vorteilhafte Verfahrensmerkmale zutreffen:

1) kein Filtrationsschritt nötig
2) keine destillative Abtrennung eines tert. Amin-Katalysators nötig
3) drastische Verringerung der notwendigen Katalysatormenge an tert. Aminen (DE—OS—3 223 398)
4) möglichst quantitative Umwandlung von NCO- in $NH_2$-Gruppen.

Völlig überraschend wurde jetzt gefunden, daß diese und weitere Vorteile dann erreicht werden, wenn die einstufige Hydrolyse von Polyisocyanaten zu Polyaminen in Gegenwart von Amidin- und/oder Guanidin-Gruppen aufweisenden Verbindungen und von dipolar-aprotischen Lösungsmitteln in im wesentlichen homogener Phase bei einem Temperaturbereich von ca. ≥20°C, vorzugsweise ≥35°C, insbesondere ≥50°C, vorgenommen wird.

Gegenstand der Erfindung ist somit ein Verfahrenn zur Herstellung von Polyaminen mit aromatischen primären Aminogruppen durch Hydrolyse von aromatische NCO-Gruppen aufweisenden Verbindungen in wäßrigen basischen Medien, dadurch gekennzeichnet, daß man in einem Einstufenverfahren

a) aromatische NCO-Gruppen aufweisende Verbindungen mit einem Gehalt von 0,5—40 Gew.-%, vorzugsweise 1,2—25 Gew.-% und besonders bevorzugt 1,5—15 Gew.-% NCO, mit

b) Wasser in Gegenwart von

c) mindestens einer acyclischen, cyclischen oder polycyclischen Verbindung mit mindestens eine Amidin- und/oder Guanidin-Struktur-Einheit als Katalysatoren in Mengen von ≥ 0,001 Gew.-Teilen pro 100 Gew.-Teile an Komponente a) und in Gegenwart von

d) wassermischbaren, aprotisch-dipolaren Lösungsmitteln in Mengen von ≥10 Gew.-Teilen pro 100 Gew.-Teile an Komponente a)

in im wesentlichen homogener Phase bei einer Temperatur zwischen 20 und 210°C, vorzugsweise ≥35°C, insbesondere ≥50°C, und vorzugsweise bei Temperaturen ≤165°C, hydrolysiert.

Die Hydrolyse wird vorteilhaft zumeist bei Temperaturen von 75 bis 135°C durchgeführt, wobei ein druckloses Arbeiten bevorzugt ist.

Erfindungsgemäß ist bevorzugt, daß man als Katalysatoren c) Diazabicycloalkene, Tetrahydropyrimidine und Tetraalkylguanidine verwendet.

Die Katalysatoren c) werden vorzugsweise in im wesentlichen gelöster Form verwendet.

Erfindungsgemäß ist ferner bevorzugt, daß man die Hydrolyse in Gegenwart von Wasser in der 1—10-fach stöchiometrischen Menge, bezogen auf NCO, vornimmt und die Hydrolyse in Gegenwart von wassermischbaren Lösungsmitteln d) mit Carbonsäuredialkylamid-, Lactam-, Tetraalkylharnstoff-, Sulfon-, Sulfoxid-, Phosphordialkylamid-Gruppen, mit einem Siedebereich von 56 250°C, in Mengen von ≥50 Gew.-

Teile a), erfolgt.

Vorzugsweise werden als NCO-Verbindungen a) NCO-Prepolymere mit einem Gehalt von 1,5 bis 15 Gew.-% aromatisch gebundenem NCO auf Basis von höhermolekularen, di- oder trifunktionellen Polyether, Polyester-, Polycarbonat- und Polycaprolacton-Polyolen eingesetzt.

Ferner ist vorteilhaft, daß man die Hydrolyse zu den Polyaminen in einer kontinuierlichen Reaktion durchführt.

Entsprechend dem erfindungsgemäßen Verfahren werden wasserlösliche Lösungsmittel d) eingesetzt, um eine im wesentlichen homogene Lösung der Reaktionsteilnehmer NCO-Verbindung a) und Wasser (b) sowie des Katalysators c) zu erzielen. Eines der besonders geeigneten Lösungsmittel ist dabei das Dimethylformamid.

Es ist aus der DE—AS—1 235 499 bekannt, Lösungen von NCO-Prepolymeren in Dimethylformamid mit etwa äquivalenten Mengen Wasser (80 bis 120% der Theorie) unter Kettenverlängerungen über Harnstoffgruppen in hochviskose Lösungen, welche zur Erspinnung von Elasthanfäden oder für Beschichtungen geignet sind, zu überführen. Die hiervon unterschiedliche Reaktion der NCO-Verbindungen mit überschüssigen Mengen an Wasser unter Bildung praktisch niedermolekularer Amine war überraschend, insbesondere auch in Gegenwart der erfindungsgemäßen Amidin- und/oder Guanidin-Verbindungen, von denen z.T. ihre rasche Hydrolyse zu katalytisch nicht wirksamen Verbindungen bekannt war.

Ferner ist bekannt, daß Isocyanate mit Dialkylformamiden zu Formamidinen reagieren (H. Ulrich et al, J.Org.Chem. *33*, 3928—3930 (1968)). Auch diese Reaktion stört nicht bei der glatten Hydrolysereaktion zu den Polyaminen nach dem erfindungsgemäßen Verfahren.

Ein erheblicher Vorteil des Verfahrens wird darin gesehen, daß bei den erfindungsgemäßen Katalysatoren c) keine Salzbildung mit dem abgespaltenen $CO_2$ eintritt, wie dies nach DE—3 131 252) bei den Alkalihydroxiden beispielsweise der Fall ist, wo erhebliche Mengen an Alkali(hydrogen)carbonaten abfiltriert werden müssen.

Da die einzusetzenden Katalysatoren c) im Reaktionsmedium gut löslich sind, besterhen keine Verteilungsungleichgewichte wie bei der Verwendung von rasch sedimentierenden Alkalicarbonaten- oder -Hydrogencarbonaten, wie sie nach DE—OS—3 223 397 Verwendung finden. Da sie in Lösung bleiben, bzw. vollmischbar sind, müssen sie auch nicht abfiltriert werden. Die im aminischen Produkt verbliebenen Katalysatormengen stören im Regelfall wegen der geringen Menge, wie sie bevorzugt verwandt wird, nicht. Außerdem erfolgt bei Reaktionsdurchführung, Aufarbeitung des Ansatzes und Aufbewahrung des aminischen Produkts in der Regel Umwandlung in bzgl. der Isocyanat-Polyadditonsreaktion nicht oder zumindest wesentlich geringer katalytisch wirksame Substanzen.

Das Verfahren mit den erfindungsgemäßen Katalysatoren ist auch besonders gut für die Hydrolyse von NCO-Prepolymeren auf Basis von Polyestern geeignet, da die schonenden Reaktionsbedingungen nicht zu einer Spaltung der Estergruppierung während der Hydrolysereaktion in nennenswertem Ausmaße führen. Die erfindungsgemäß zu verwendenden Katalysatoren stellen technisch leicht zugängliche, wohlfeile Katalysatoren dar, die gegebenenfalls nach Abtrennung wiederverwendet werden können. Diese Katalysatoren zeigen auch weniger Wechselwirkung mit alkalisch hydrolysierbaren Lösungsmitteln wie Dimethylformamid. Bei Vewendung von stark basischen Alkalihydroxiden tritt dagegen eine deutliche Hydrolyse von z.B. Dimethylformamid ein.

Erfindungsgemäß können gegebenenfalls untergeordnete Mengen einer Verbindung mit einer, zwei oder mehreren, an aliphatische, cycloaliphatische oder aromatische Rest gebundenen Hydroxy- und/oder Amino- und/oder Thiolgruppen mitverwendet werden. Die Mitverwendung dieser "H-aktive Gruppen" enthaltenden Verbindungen führt zu folgenden Vorteilen: Aus niedermolekulare Polyisocyanate enthaltenden NCO-Verbindungen, z.B. NCO-Semiprepolymeren, lassen sich ohne Behandlung der NCO-Verbindungen durch Dünnschichten oder ähnliche Verfahren Polyamine herstellen, die praktisch frei von monomerem Polyamin sind. Es lassen sich so in einfacher Weise und in einem verbundenen Reaktionsschritt auch modifizierte Polyamine, die in einem Molekül zusätzlich über Urethangruppen, Thiourethangruppen oder Harnstoffgruppen verknüpfte Polyaminsegmente, gegebenenfalls unterschiedlicher Art, besitzen, herstellen.

Aus einer z.B. difunktionellen NCO-Verbindung läßt sich durch Verwendung einer tri- oder höherfunktionellen, "H-aktiven Gruppe" besitzenden Verbindung bei der NCO-Hydrolyse so ein tri- oder höherfunktionelles Polyamin gewinnen. Solcherart gewonnene Produkte weisen auch besonders geringe Gehalte an monomerem Amin auf.

Die zwei oder mehrere, vorzugsweise aromatische, NCO-Gruppen aufweisenden, im erfindungsgemäßen Verfahren einsetzbaren NCO-Verbindungen a), im folgenden auch kurz "NCO-Verbindungen" genannt, stellen entweder modifizierte Polyisocyanate dar, wie sie durch teilweise Umwandlung der Isocyanatgruppen in Urethan-, Harnstoff-, Biuret-, Uretdion-, Isocyanurat- und/oder Uretonimingruppen entstehen, oder sind sogenannte NCO-Prepolymere aus gegenüber NCO-Gruppen reaktive H-Gruppen tragenden, mehrwertigen Verbindungen des Molekulargewichts 62 bis 12 000, vorzugsweise 400 bis 6 000, und (überschüssigen) Mengen an aromatischen Polyisocyanaten oder sind gegenenfalls Semiprepolymere aus NCO-Prepolymeren und zusätzlichen niedermolekularen Polyisocyanaten.

Als modifizierte aromatische Polyisocyanate sind beispielsweise geeignet:

Urethangruppen-haltige Polyisocyanate (durch Modifizierung mit niedermolekularen Polyolen enstanden), Harnstoffgruppen aufweisende Polyisocyanate (Wassermodifizierung, DE—PS—1 230 778), Biuretgruppen aufweisende Polyisocyanate (US—PS—3 124 605, 3 201 372, GB—PS—899 050), Isocyanuratgruppen aufweisende Polyisocyanate (DE—PS'en— 1 022 789 und 1 222 067) sowie Uretdion- oder Uretonimingruppen enthaltende, dimere oder oligomere Polyisocyanate sind bekannnte Verbindungen oder nach bekannten Verfahren zugänglich. Eine Reihe solcher Uretdionpolyisocyanate ist in Analytical Chemistry of the Polyurethanes, Band 16/III, High-Polymers-Series (Wiley 1969) aufgeführt.

Solche modifizierten Polyisocyanate mit Urethan- und/oder Harnstoff- und/oder Biuret- und/oder Uretdion- und/oder Isocyanurat- und/oder Uretonimin-Gruppen, wie sie im erfindungsgemäßen Verfahren einsetzbar sind, haben üblicherweise einen NCO-Gehalt von 5 bis 40 Gew.-%, bevorzugt 10 bis 25 Gew.-%.

Die im erfindungsgemäßen Verfahren einzusetzenden NCO-Verbindungen a) sind besonders jedoch NCO-Prepolymere, wie sie in an sich bekannter Weise durch Umsetzung von niedermolekularen und/oder höhermolekularen Hydroxy- und/oder Amino- und/oder Thiolgruppen als reaktive Gruppen enthaltenden Verbindungen (Molekulargewicht 62 bis ca. 12 000) mit einem Überschuß an Polyisocyanaten entstehen.

Für diese Umsetzung geeignete Polyisocyanate und niedermolekulare und/oder höhermolekulare Hydroxy- und/oder Amino- und/oder Thiolgruppen als reaktive Gruppen enthaltende Verbindungen (Molekulargewichte 60 — ca. 12 000) sind auf S. 12—23 der DE—OS—3 223 397 aufgeführt worden.

Für das erfindungsgemäße Verfahren werden NCO-Prepolymere bevorzugt, die aus höhermolekularen Polyolen (Molmasse 400—12 000), vorzugsweise Polyetherpolyolen, gegebenenfalls unter Mitverwendung von Kettenverlängerungsmitteln der oben beschriebenen Art (Molmasse 62—399), durch Umsetzung mit aromatischen Diisocyanaten im Äquivalentverhältnis von 1:1,5 bis 1:2,8, insbesondere ca. 1:1,5 bis 1:2, erhalten worden sind.

Der NCO-Gehalt de eingesetzten NCO-Prepolymere beträgt 0,5% bis 30 Gew.-%, bevorzugt 1,2 Gew.-% bis 25 Gew.-%.

Im erfindungsgemäßen Verfahren können jedoch auch sogenannte "Semiprepolymere", d.h. Mischungen von NCO-Prepolymeren mit weiteren freien Polyisocyanaten, eingesetzt werden, die einen u.U. noch höheren Gehalt, z.B. bis 40 Gew.-% NCO, aufweisen können. Aus praktisch/wirtschaftlichen Gründen ist dies jedoch in den meisten Fällen nicht sinnvoll, außerdem können die aus den monomeren Polyisocyanatanteilen entstandenen monomeren Aminanteile bei einer Reihe von Anwendungen stören.

Die freie NCO-Gruppen aufweisenden Verbindungen a) in Form ihrer (zumeist urethangruppenfreien) modifizierten Isocyanate bzw. in Form ihrer (urethangruppenhaltigen) NCO-Prepolymeren bzw. ihrer "Semiprepolymeren" besitzen insgesamt einen Gehalt an NCO-Gruppen innerhalb von 0,5 bis 40 Gew.-%, bevorzugt 1,2 bis 25 Gew.-% und besonders bevorzugt von 1,5 bis 10 Gew.-% NCO.

Wasser (Komponente b) zur Hydrolyse kann im Prinzip in jeder beliebigen Menge verwendet werden. Soll jedoch vollständige Umwandlung der NCO-Gruppen in Aminogruppen angestrebt werden, so muß mind. ein Äquivalent Wasser (hierunter ist 1 Mol Wasser zu verstehen) pro Äquivalent an NCO-Gruppen eingesetzt werden. Wird weniger als 1 Äquivalent Wasser verwendet, so tritt Vorverlängerung unter Harnstoffbildung auf. Bevorzugt wird deshalb ein Überschuß an Wasser verwendet, bevorzugt 1—12 Äquivalente Wasser, besonders bevorzugt 2—10 Äquivalente. Wird ein großer Überschuß an Wasser mitverwendet, z.B ≥25 Äquivalente Wasser pro Äquivalent NCO, so sinken in der Regel die Umwandlungsgrade der Überführung von NCO- in $NH_2$-Gruppen. Doch mag es innerhalb der Erfindung Kombinationen aus Prepolymer, Lösungsmittel und Katalysator geben, bei der andere Wasserkonzentrationen zu optimalen Ausbeuten führen.

Als Katalysatoren c) für das erfindungsgemäße Verfahren sind im Prinzip alle basischen Guanidin- und/oder Amidin-Verbindungen, gegebenenfalls auch in Form ihrer Salze oder Komplexe, geeignet. Solche Verbindungen sind z.B. in folgenden Druckschriften aufgeführt, die hiermit als Referenz eingeschlossen sein sollen: DE—2 447 067, DE—3 049 131, DE—2 722 514, DE—2 434 185, DE—1 222 666, DE—3 041 834, (EP—51 787), DE—3 018 023, DE—2 439 550, US—3 814 707, DE—3 125 438, DE—3 126 436 (EP—69 295), DE—3 003 978 (EP—33 879), DE—1 745 418 (US—3 769 244), DE—1 960 262, Can. P. 918 675, US—4 393 149 und insbesondere EP—150 803. Geeignete Amidin/Guanidin-Verbindungen sind auch die mit Formeln III—VII in der EP—A—150 790 insbesondere Seite 18 bis 34 aufgeführten Verbindungen.

Aus Gründen der praktischen Durchführung sind dabei Katalysatoren bevorzugt, die im Handel erhältlich sind, z.B. 1,5-Diaza-bicyclo[4,3,0]non-5-en (DBN), 1,8-Diazabicyclo[(5,4,0]undec-7-en (DBU), Tetramethylguanidin (TMG) oder 1,2-Dimethyltetrahydropyrimidin:

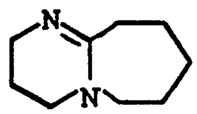

DBU

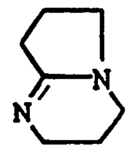

DBN

(vgl. Römpp, Chemilexikon, 8. Auflage, 1981)

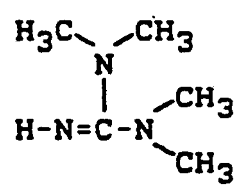

TMG

(Fa. Rheinchemie-Mannheim)

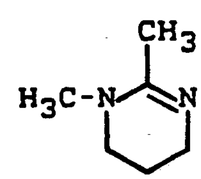

1,2-Dimethyltetrahydropyrimidin

Bei der Auswahl der Amidin- oder Guanidin-Verbindungen können acyclische Verbindungen, monocyclische Verbindungen mit exo- oder endocyclischer C=C-Doppelbindung oder C—N-Einfachbindung, bicyclische Verbindungen oder andere Amide/Guanidine eingesetzt werden. Voraussetzung ist natürlich, daß durch strukturell-sterische Zwänge im Molekül nicht das basische Wirkungsprinzip aufgehoben wird.

Die Menge an verwendetem Katalysator ist nicht kritisch, sie sollte über 0,001 g Katalysator pro 100 g umzuwandelnder NCO-Komponente, bevorzugt 0,005—5 g, besonders 0,1—2 g/100 g NCO-Komponente liegen. Über einen weiten Bereich an Katalysatormenge ist der Umwandlungsgrad mehr von der Wassermenge als von der Katalysatormenge abhängig, da es für die Wassermenge nach oben hin eine gewisse Begrenzung gibt, kaum jedoch für den Katalysator.

Bevorzugt werden die erfindungsgemäßen Katalysatoren alleine verwandt, es können jedoch, wenn besondere Effekte verlangt werden, Abmischungen mit anderen, aus der Isocyanatchemie an sich bekannten Katalysatorverbindungen verwendet werden.

Als Lösungsmittel d) werden wassermischbare/wasserlösliche aprotisch-dipolare Lösungsmittel eingesetzt.

Geeignete Lösungsmittelklassen sind:

1. wasserlösliche, aliphatische oder cycloaliphatische Säureamide mit 1 bis 10 Kohlenstoffatomen, z.B. Dimethylformamid, Diethylformamid, N-Methylpryrrolidon, Dimethylacetamid, Caprolactam, Formamid. Bevorzugt sind Dimethylformamid, Dimethylacetamid und N-Methylpyrrolidon,

2. wasserlösliche, tetraalkylierte aliphatische Harnstoffe mit 4 bis 12 C-Atomen, z.B. Tetramethylharnstoffe oder Tetraethylharnstoff,

3. wasserlösliche, aliphatische oder cycloaliphatische Sulfone oder Sulfoxide mit 2 bis 10 Kohlenstoffatomen, z.B. Tetramethylsulfon oder Dimethylsulfoxid,

4. wasserlösliche, aliphatische oder cycloaliphatische Phosphorsäureamide, z.B. Hexamethylphosphorsäuretriamid.

Die Lösungsmittel können auch in beliebigen Mischungsverhältnissen zueinander eingesetzt werden. Unter den genannten Lösungsmitteln werden solche bevorzugt, welche bei Normaldruck zwischen 56 und 250°C, vorzugsweise 64 bis 165°C, sieden, da sich hierbei die Aufarbeitung vereinfacht.

Bevorzugte wassermischbare Lösungsmittel sind Dimethylformamid, Dimethylacetamid und N-Methylpyrrolidon, Tetramethylensulfon, ganz besonders bevorzugt wird als ausschließliches Lösungmittel N,N-Dimethylformamid verwendet.

Eine Mitverwendung von nicht vollständig mit Wasser mischbaren Lösungsmitteln, z.B. Propionitril, Methylethylketon, Ethylacetat oder Kohlenwassestoffen ist in untergeordneten Mengen möglich, aber nicht bevorzugt. Für die Mengen (insbesondere die Obergrenzen) an einzusetzenden Lösungsmitteln d) gelten folgende Randbedingungen des Verfahrens:

1. Pro 100 Teile NCO-Verbindung a) sollen in der Hydrolyse-Reaktionsmischung ≥10, bevorzugt ≥50 und besonders bevorzugt ≥100 Teile d) vewendet werden.

2. Es muß soviel Wasser b) und gegebenenfalls Lösungsmittel d) verwendet werden, daß eine im wesentlichen homogene (höchstens schwach trübe) oder vorzugsweise eine homogene, klare Lösung mit der NCO-Verbindung bei den Reaktionstemperaturen gebildet wird; besonders bevorzugt soviel Wasser, daß eine bei allen Verfahrenstemperaturen einphasige Mischung entsteht.

Die katalytisch wirkenden Verbindungen werden im allgemeinen den Lösungsmitteln und Wasser zugesetzt. Die Zugabe zur Isocyanatgruppen-haltigen Verbindung ist u.U. möglich, aber nicht bevorzugt.

Zur Hydrolyse der NCO-Verbindung zu Polyaminen mit hinreichend hoher Aminzahl (hoher Konversionsrate) ist es günstig, eine Konzentration der NCO-Verbindung ≤50 Gew.-% in der Reaktionsmischung aufrechtzuerhalten. Je größer die Verdünnung durch Lösungsmittel (nicht durch Wasser) bei der Reaktion gewählt wird, um so besser wird im allgemeinen der Hydrolysenumsatz, d.h. es werden um so höhere Aminzahlen des Polyamins, d.h. eine um so höhere Konversion der NCO- in die $NH_2$-Gruppen, erhalten. Eine Grenze der Verdünnung ergibt sich praktisch aus der Wirtschaftlichkeit bei der Aufarbeitung; sie liegt in der Praxis etwa bei 3%iger Lösung.

Es ist dabei aber mindestens so viel Lösungsmittel d) mitzuverwenden, daß eine weitgehend homogene, vorzugsweise homogene, Reaktionsmischung verbleibt.

In einer weniger bevorzugten Ausführungsform können der Reaktionsmischung auch "H-aktive Gruppen" enthaltende Verbindungen mit zwei oder mehreren Hydroxy-, Amino- und/oder Thiolgruppen beigemischt werden. Diese Verbindungen wurden bereits als Aufbaukomponenten der im erfindungsgemäßen Verfahren einsetzbaren NCO-Verbindungen genannt, besonders bevorzugt sind difunktionelle bis gegebenenfalls tetrafunktionelle Verbindungen des Molekulargwichts 62—2000, insbesondere solche mit mindestens 2 primären Hydroxygruppen, z.B. Ethandiol, Butandiol, Propandiol, Polyethylenglykole, Trimethylolpropan oder ähnliche. Selbstverständlich können auch Verbindungen mit verschiedenen "H-aktiven Gruppen" verwendet werden. z.B. Aminoalkanole.

Verbindungen, die nur eine H-aktive Gruppe aufweisen, z.B. Methanol, Ethanol, Cyclohexanol, Cyclohexylamin, Anilin, asymmetrisches Dimethylhydrazin, können als monofunktionelle Kettenabbrecher mitverwendet werden.

Als Nebenreaktion im erfindungsemäßen Verfahren kann die Vorverlängerung auftreten, d.h. Isocyanat und bereits gebildetes Amin reagieren unter Kettenverknüpfung zu Harnstoffen. Diese

Nebenreaktion läßat sich durch Arbeiten in verdünnter Lösung, der Verwendung der erfindungsgemäßen Katalysatoren und der Einhaltung relativ hoher Reaktionstemperaturen, z.B. 80 bis 130°C, weitgehend zurückdrängen. Zwar ist ein möglichst geringes Ausmaß dieser Nebenreaktionen erwünscht, aus ökonomischen Gründen kann aber auch ein gewisser Grad an Vorverlängerung in Kauf genommen werden.

Die erfindungsgemäße Reaktion wird bevorzugt in homogener Phase durchgeführt. Durch ein geringfügiges Überdosieren der Wassermenge oder der Menge der NCO-Verbindung kann gegebenenfalls eine leichte Trübung der Reaktionsmischung erhalten werden, da die Ausgangsstoffe nicht mehr vollständig gelöst sind.

Eine durch übermäßige Wasserzugabe unter Ausfällung des NCO-Prepolymers ergibt jedoch unzureichende Produkte. Durch einige wenige Vorversuche lassen sich die von den Ausgangsverbindungen abhängigen optimalen Mischungsverhältnisse leicht bestimmen.

Die Reaktion kann bei Temperaturen von 50 bis 210°C durchgeführt werden. Bevorzugt wird jedoch bei Temperaturen von 80 bis 130°C gearbeitet, da hierbei die besten Raum/Zeit-Ausbeuten bei gleichzeitig hoher Löslichkeit und überraschenderweise geringster Harnstoff-Verlängerung erreicht werden. Besonders bevorzugt wird am Siedepunkt des Gemisches gearbeitet, der wegen der Anwesenheit von Wasser zumeist bei ca. 90 bis 105°C liegt. Unter besonderen Umständen kann es auch notwendig werden, die Reaktion unter-Druck durchzuführen, um ausreichend hohe Temperaturen zu erhalten.

Das Einsetzen der Reaktion ist durch die fast spontane Abspaltung von $CO_2$ zu erkennen, die auch bereits bei niedrigen Temperaturen, z.B. 20°C, beobachtbar ist. Es ist jedoch erbeblich günstiger, erfindungsgemäß bei den angegebenen höheren Temperaturen zu arbeiten, um die Harnstoffbildung zurückzudrängen. Wichtig ist, daß für eine sehr gute und schnelle Durchmischung unter homogener Lösung der Reaktanden gesorgt wird, was im wesentlichen durch die Verwendung der Lösungsmittel sichergestellt werden muß. In gleicher Richtung wirkt auch die Viskositätsverminderung bei Anwendung der höheren Reaktionstemperaturbereiche. Die Reaktion kann diskontinuierlich oder kontinuierlich durchgeführt werden.

In einer diskontinuierlichen Ausführungsform wird z.B. die NCO-Gruppen aufweisende Verbindung a) in die wäßrige, Lösungsmittel und Katalysatoren enthaltende Mischung, eingebracht. Dies kann durch Einspritzung mittels einer Düse geschehen, wobei durch intensives Rühren eine möglichst gute Verteilung angestrebt wird.

In einer kontinuierlichen Ausführungsform, die für eine großtechnische Produktion besonders geeignet ist, werden die NCO-Verbindungen a) (gegebenenfalls als Lösung) und die wäßrige Lösung getrennt einem gemeinsamen Reaktionsraum zudosiert, z.B. mittels eines Durchflußmischers intensiv vermischt, so zur Reaktion gebracht und aus dem Mischraum schnell ausgetragen. Die Dosierung kann z.B. über graduierte Tropftrichter oder mittels einer Kolben-und/oder Membrandosierpumpe oder einer anderen machinellen Dosiervorrichtung vorgenommen werden. Es ist bei der kontinuierlichen Dosierung bevorzugt, beide Komponenten in sehr kurzer Zeit (Sekunden oder Bruchteilen davon) mit einer geeigneten, gegebenenfalls maschinell betriebenen Vorrichtung, zu vermischen, zur Reaktion zu bringen und aus dem Reaktionsraum auszutragen.

Zur Erleichterung der Reaktion der Isocyanatgruppen von a) mit der wäßrigen, katalysatorhaltigen Lösungsmittelphase können verschiedene Zusätze verwendet werden. So können zum Homogenisieren ein oder mehrere handelsübliche Emulgatoren zugesetzt werden, z.B in Mengen von 0,01 bis 1 Gew.-Teil auf 100 Teile Reaktionsmischung. Bei Verwendung homogener Reaktionsmischungen (gelöste Komponenten) ist dies jedoch nicht notwendig.

Bei den in der kontinuierlichen Ausführungsform geeigneten Durchflußmischern unterscheidet man zwischen den statischen Mischern mit festen Einbauten und dynamischen Mischern mit beweglichen Einbauten nach dem Rotor-Stator-Prinzip. Sie können gegebenenfalls geheizt oder gekühlt werden. Die erforderliche Mischenergie wird bei den statischen Mischern über die Pumpen aufgebracht, während bei den dynamischen Mischern ein sepfararater Motor den Rotor treibt. In allen Fällen hängt der Reaktionsumsatz der Isocyanatgruppen zu Aminogruppen auch von der aufgebrachten Leistung, bzw. den entsprechend erzeugten Scherkräften, d.h. von der möglichst schnellen homogenen Verteilung der NCO-Verbindung im Reaktionsmedium ab.

Als statische Mischer lassen sich beispielsweise Mischer mit einfachen Einbauten (z.B. Wendeln) oder komplizierten Einbauten (z.B. Packungsmischern) oder Mehrkanalmischer verwenden. Weiterhin können auch Mischdüsen oder die Mischkammern in den HK-Maschinen der Fa. Hennecke (Birlinghoven, Bundesrepublik Deutschland), in die die Ausgangsprodukte unter hohem Druck eingedüst werden (Gegenstrominjektiton), eingesetzt werden. Als dynamische Mischer kommen für das erfindungsgemäße Verfahren beispielsweise die Durchflußmischer in Betracht, die ebenso wie die bekannten Kreiselhomogenisierungsmaschinen nach dem Stator-Rotor-Prinzip benutzt werden können. Die aufzubringende Mischungsleistung beträgt je nach gewünschten Dispergiergrad, vewendetem Mischertyp und Viskosität der Ausgangstoffe etwa 1 bis über 10 KW pro Liter Mischinhalt.

Nach dem Mischungsvorgang kann direkt zum Polyamin aufgearbeitet werden, gegebenenfalls kann auch eine kurze Nachreaktionszeit von meistens weniger als 5 Minuten angeschlossen werden. Hierbei wird das Reaktionsgemisch bevorzugt unter Normaldruck am leichten Rückfluß erhitzt, um das entstandende Kohlendioxid möglichst vollständig abzutrennen. Die Reaktionsmischung kann ohne

Nachteile aber auch längere Zeit auf Temperatur gehalten werden. Bevorzugt wird nach erfolgter Vermischung jedoch sofort aufgearbeitet.

Auch die Ausarbeitung kann kontinuierlich oder diskontinuierlich erfolgen. Die Aufarbeitung des Reaktionsgemisches geschieht gewöhnlich destillativ, extraktiv oder über eine Phasentrennung oder mit einer Kombination dieser Methoden.

Es werden, gegebenenfalls unter reduziertem Druck, die flüchtigen Bestandteile abdestilliert. Im allgemeinen werden Sumpftemperaturen (im verbleibenden Polyamin) von 60—100°C gegen Ende der Eindampfung eingehalten.

Bei Verwendung eines Dünnschichtverdampfers können kurzfristig deutlich höhere Temperaturen, z.B. 170 bis 200°C, im Polyamin erreicht werden.

Extraktionsverfahren, gegebenenfalls nach Verdünnung mit Wasser, können mit wasserunlöslichen Lösungsmitteln wie Methylenchlorid oder Chlorbenzol durchgeführt werden, sind jedoch nicht bevorzugt. Eine Phasentrennung des Reaktionsgemisches durch Abkühlung tritt manchen Fällen ein, wenn die Hydrolyse bei relativ hohen Temperaturen und in Gegenwart von relativ viel Wasser an der Grenze der Löslichkeit vorgenommen wurde. Die Phasentrennung kann durch Zusatz von Wasser verbessert oder auch erst erreicht werden. Man trennt die wäßrige, gegebenenfalls Lösungsmittel und zumeist auch den Katalysator enthaltende Phase von der Polyaminphase ab.

Die wäßrige Phase kann dann meistens direkt wiederverwendet werden.

Die Polyaminphase enthält neben dem Polyamin gegebenenfalls Restmengen des Katalysators, etwas Wasser, sowie evtl. Lösungsmittel d), welche destillativ, gegebenenfalls unter Anlegen eines Vakuum oder über eine Dünnschichtdestillation, möglichst vollständig entfernt werden.

Enthält die NCO-Gruppen-haltige Verbindung — bedingt durch ihre Herstellung — noch freies, d.h. monomeres Isocyanat, so kann u.U. das hieraus entstehende monomere Amin bei der Aufarbeitung durch Phasentrennung sich in der Wasser/Lösungsmittelphase stark anreichern. Das durch diese einfache Aufarbeitung erhaltene Polyamin ist dann praktisch monomerenfrei. Es kann sich dann aber empfehlen, die wäßrige Lösung durch Aufarbeitung von monomerem Amin weitgehend zu befreien, bevor sie wiederverwendet wird.

Bevorzugt erfolgt die Aufarbeitung des Reaktionsgemisches so, daß nach Beendigung der Reaktion (keine $CO_2$-Entwicklung mehr zu beobachten) das Lösungsmittel bzw. Lösungsmittel/Wasser-Gemisch abdestilliert, bevorzugt unter Anwendung von Vakuum, z.B. 1—700 Torr, wird, wobei zur Entfernung flüchtiger Reste noch höheres Vakuum, z.B. 0,001—1 Torr, angelegt werden kann. Ein Temperaturbereich von anfangs ca. 60—100°C, später 80—100°C, hat sich hierbei bewährt. Das abdestillierte Lösungsmittel kann wiederverwendet werden.

Die nach der Aufarbeitung erfindungsgemäß erhaltenen Polyamide stellen im allgemeinen farblose bis schwach gefärbte, mittelviskose bis hochviskose und gegebenenfalls höherschmelzende Produkte mit den bereits angegebenen Aminogruppengehalten dar. Diese Polyamine weisen entsprechend ihren Ausgangsstoffen ferner Urethan- und/oder Harnstoff- und/oder Uretdion- und/oder Isocyanurat- und/oder Biuretgruppen, sowie gegebenenfalls Ether- und/oder Acetal- und/oder Carbonat- und/oder Ester- und/oder Thioether und/oder Dialkylsiloxangruppen und/oder die Reste von Polybutadienen auf, wie sie bereits in den NCO-Verbindungen vorgelegen haben. Durch Nebenreaktionen können jedoch auch zusätzliche Bindungen enstehen, z.B. Harnstoffgruppen aus bereits verseiften Anteilen und noch verbliebenen NCO-Gruppen während der Hydrolyseraktion. Die Menge der in den Polyaminen enthaltenen primären aromatischen Aminogruppen entsprechen maximal de Menge der NCO-Gruppen in den NCO-Verbindungen, also etwa 0,19 bis 20,3 Gew.-% $NH_2$, bevorzugt 0,46 bis 11,3 Gew.-% $NH_2$ und besonders bevorzugt 0,58 bis 6,7 Gew.-% $NH_2$.

Die efindungsgemäß erhaltenen, bevorzugt aromatischen Polyamine werden wegen ihres niedrigen Dampfdruckes vorzugsweise als Reaktionspartner für gegebenenfalls blockierte Polyisocyanate bei der Herstellung von Polyurethanen (Polyurethanharnstoffen), gegebenenfalls zelligen Polyurethankunststoffen oder Polyurethanschaumstoffen eingesetzt, wobei sie gegebenenfalls auch mit anderen niedermolekularen (Molekulargewicht 32 bis 399) und/oder höhermolekularen (Molekulargewicht 400 bis ca. 12 000) Verbindungen mit gegenüber Isocyanaten reaktiven Gruppen kombiniert werden können. Geeignete Ausgangskomponenten für die an sich bekannte Herstellung von Polyurethankunststoffen werden oben im Zusammenhang mit der Prepolymerherstellung bzw. auch in DE—A—2 302 564, DE—A—2 432 764 (US—PS—3 903 679) sowie in den DE—A—2 639 083, 2 512 385, 2 513 815, 2 550 796, 2 550 797, 2 550 833, 2 550 860 und 2 550 862 genannt. Dort finden sich auch Hinweise auf bei der Polyurethanherstellung gegebenenfalls mitzuverwendende Hilfsund Zusatzstoffe.

Die erfindungsgemäß hergestellten Polyamine können zur Herstellung von z.B. Elastomeren, Beschichtungen, Fäden (in der Applikation aus Schmelzen, Lösungen, Dispersionen oder Reaktivkomponentenmischungen) eingesetzt werden.

Weitere Verwendungszwecke der erfindungsgemäß hergestellten Polyamine sind z.B. Kupplungskomponenten für Diazofarbstoffe, Härter für Epoxid- und Phenolharze, sowie alle anderen an sich bekannten Reaktionen von Aminen wie Amidoder Imidbildung und andere.

Die folgenden Beispiele dienen der Erläuterung des erfindungsgemäßen Verfahrens. Wenn nicht anders vermerkt, sind Mengenangaben als Gewichtsteile bzw. Gewichtsprozente zu verstehen.

BEISPIELE

Als NCO-Komponente wurde ein NCO-Prepolymer aus Toluylen-2,4-diisocyanat und einem Polypropylenglykol der OH-Zahl 56, hergestellt durch 3-stündiges Rühren bei 80°C, des NCO-Gehaltes 3,3% verwendet.

Beispiel 1

Vorgelegt wird ein 90°C heißes Gemisch aus 1,1 l Dimethylformamid (DMF), 250 g Wasser und 1 g Diazabicyclononen (DBN). Innerhalb 20 min werden unter $CO_2$-Entwicklung 500 g des obigen Prepolymers zugetropft. Nach Beendigung der $CO_2$-Entwicklung werden DMF und Wasser abdestilliert. Das Aminprodukt hat eine NH-Zahl von 36 mg KOH/g ($HClO_4$/Essigsäure).

Beispiel 2

Es wird wie in Beispiel 1 verfahren, jedoch nur 25 g anstelle von 250 g Wasser verwendet.
NH-Zahl ($HClO_4$/Essigsäure): 49 mg KOH/g
NH-Zahl (Acetanhydrid/Pyridin, 24 h, 80°C): 49,2 mg KOH/g
Säure-Zahl: 0,2 mg KOH/g.

Beispiel 3

Es wird wie in Beispiel 2 verfahren, jedoch mit 1 g Tetramethylguanidin anstelle von 1 g DBN.
NH-Zahl ($HClO_4$/Essigsäure): 45,9 mg KOH/g.

Beispiel 4

Es wird wie in Beispiel 2 verfahren, jedoch mit 1 g 1,2-Dimethyltetrahydropyridin anstelle von 1 g DBN.
NH-Zahl ($HClO_4$/Essigsäure): 44,9 mg KOH/g.

Beispiel 5

Es wird wie in Beispiel 2 verfahren, jedoch mit 1 g N-Cyclohexyl-1-methyltetrahydropyrimidin anstelle von 1 g DBN.
NH-Zahl ($HC10_4$/Essigsäure): 47,1 mg KOH/g.

Beispiele 6—9

Die Beispiele 6—9 werden mit dem nämlichen Isocyanat wie in den Beispielen 1—5, jedoch mit 3,6% NCO durchgeführt.

Beispiel 6
(Vergleich; siehe Verfahren nach DE—OS—3 233 398)

Vorgelegt wird ein 90°C heißes Gemisch aus 1050 g Dimethylformamid, 50 g Wasser und 1,9 g Triethylamin. Unter Rühren werden innerhalb von 20 min 500 g des obigen NCO-Prepolymers zugegeben. Nach der Beendigung der Gasentwicklung werden zuerst bei 20 mbar, später 0,13 mbar/100°C DMF, Wasser und tert. Amin abdestilliert. Die gebildeten Polyamine mit tert. Aminkatalysator ergeben niedrige (schlechtere) Aminzahlen.
NH-Zahl: 39,6 mg KOH/g.

Beispiel 7
(Vergleich; siehe Verfahren nach DE—OS—3 223 398)

Es wird wie in Beispiel 6 verfahren, jedoch 0,5 g Triethylamin anstelle von 1,9 g Triethylamin verwendet.
NH-Zahl: 35,3 mg KOH/g (relativ niedrige NH-Zahl).

Beispiel 8

Es wird wie in Beispiel 6 verfahren, jedoch mit 1 g Diazabicycloundecen (DBU) anstelle von Triethylamin.
NH-Zahl: 47,3 mg KOH/g.

Beispiel 9

Es wird wie in Beispiel 6 verfahren, jedoch mit 0,1 g Diazabicycloundecen (DBU) anstelle von Triethylamin. Der erfindungsgemäße Katalysator ergibt trotz Anwendung in sehr niedriger Konzentration ein Polyamin mit verbesserter (erhöhter) Aminzahl gegenüber Vergleichsbeispiel 7.
NH-Zahl: 43,8 mg KOH/g.

Beispiel 10

Es wird wie in Beispiel 6 verfahren, jedoch mit 1,5 g Diazabicycloundecen (DBU) als Katalysator anstelle von Triethylamin und bei 35°C Temperatur der Vorlage anstatt 90°C. Es wird ein Polyamin mit verbesserter (höherer) Aminzahl erhalten.
NH-Zahl: 42,1 mg KOH/g.

**Patentansprüche**

1. Verfahren zur Herstellung von Polyaminen mit aromatischen primären Aminogruppen durch Hydrolyse von aromatische NCO-Gruppen aufweisenden Verbindungen in wäßrigen basischen Medien, dadurch gekennzeichnet, daß man in einem Einstufenverfahren

a) aromatische NCO-Gruppen aufweisende Verbindungen mit einem Gehalt von 0,5—40 Gew.-%, mit

b) Wasser in Gegenwart von

c) mindestens einer acyclischen, cyclischen oder polycyclischen Verbindung mit mindestens einer Amidin- und/oder Guanidin-Struktur-Einheit als Katalysatoren in Mengen von ≥0,001 Gew.-Teilen pro 100 Gew.-Teile an Komponente a) und in Gegenwart von

d) wassermischbaren, aprotisch-dipolaren Lösungsmitteln in Mengen von ≥10 Gew.-Teilen pro 100 Gew.-Teile an Komponente a)

in im wesentlichen homogener Phase bei einer Temperatur zwischen 20 und 210°C, hydrolysiert.

2. Verfahren nach Anspruch 1), dadurch gekennzeichnet, daß man als Katalysatoren c) Diazabicycloalkene, Tetrahydropyrimidine und Tetraalkylguanidine verwendet.

3. Verfahren nach Ansprüchen 1 und 2 dadurch gekennzeichnet, daß man die Katalysatoren c) in im wesentlichen gelöster Form verwendet.

4. Verfahren nach Ansprüchen 1 bis 3, dadurch gekennzeichnet, daß man die Hydrolyse in Gegenwart von Wasser in der 1—10 fach stöchiometrischen Menge, bezogen auf NCO, vornimmt.

5. Verfahren nach Ansprüchen 1 —4, dadurch gekennzeichnet, daß man die Hydrolyse in Gegenwart von wassermischbaren Lösungsmitteln d) mit Carbonsäuredialkylamid-, Lactam, Tetraalkylharnstoff-, Sulfon-, Sulfoxid-, Phosphordialkylamid-Gruppen, mit einem Siedebereich von 56 bis 250°C in Mengen von ≥50 Gew.-Teilen d), bezogen auf 100 Gew.-Teile a), vornimmit.

6. Verfahren nach Ansprüchen 1 bis 5, dadurch gekennzeichnet, daß man die Hydrolyse bei Temperaturen von 75 bis 135°C durchführt.

7. Verfahren nach Ansprüchen 1 bis 6, dadurch gekennzeichnet, daß man als NCO-Verbindungen a) NCO-Prepolymere mit einem Gehalt von 1,5 bis 15 Gew.-% aromatisch gebundenem NCO auf Basis von höhermolekularen, di- oder trifunktionellen Polyether-, Polyester-, Polycarbonat- und Polycaprolacton-Polyolen einsetzt.

8. Verfahren nach Ansprüchen 1 bis 7, dadurch gekennzeichnet, daß man die Hydrolyse zu den Polyaminen in einer kontinuierlichen Reaktion durchführt.

**Revendications**

1. Procédé de fabrication de polyamines avec des groupes amino aromatiques primaires par hydrolyse en milieu aqueux basique de composés présentant des groupes NCO aromatiques, caractérisé en ce que l'on hydrolyse, dans un procédé en une étape:

a) des composés présentant des groupes NCO aromatiques avec une teneur de 0,5 à 40% en poids, avec

b) de l'eau en présence de

c) au moins un composé acyclique, cyclique ou polycyclique avec au moins une unité structurelle amidine et/ou guanidine comme catalyseurs en quantités ≥0,001 parties en poids pour 100 parties en poids de composant a), et en présence de

d) solvants dipolaires aprotiques miscibles à l'eau en quantités ≥10 parties en poids pour 100 parties en poids de composant a)

en phase essentiellement homogène à une température comprise entre 20 et 210°C.

2. Procédé selon la revendication 1), caractérisé en ce que l'on utilise comme catalyseurs c) des diazabicycloalcènes, des tétrahydropyridines et des tétraalkylguanidines.

3. Procédé selon les revendications 1 et 2, caractérisé en ce qu'on utilise les catalyseurs c) sous forme substantiellement dissoute.

4. Procédé selon les revendications 1 à 3, caractérisé en ce que l'on effectue l'hydrolyse en présence d'eau dans un rapport stoechiométrique de 1 à 10 par rapport au NCO.

5. Procédé selon les revendications 1 à 4, caractérisé en ce qu'on effectue l'hydrolyse en présence de solvants d) miscibles à l'eau avec des groupes dialkylamide d'acide carboxylique, lactame, tétraalkylurée, sulfone, sulfoxyde, phosphoredialkylamide, avec un domaine d'ébullition de 56 à 250°C, en quantités ≥50 parties en poids de d) par rapport à 100 parties en poids de a).

6. Procédé selon les revendications 1 a 5, caractérisé en ce que l'on effectue l'hydrolyse à des températures de 75 à 135°C.

7. Procédé selon les revendications 1 a 6, caractérisé en ce que l'on utilise comme composés NCO a) des prépolymères NCO avec une teneur de 1,5 à 15% en poids de NCO lié à des fragments aromatiques, à base de polyols bi- ou trifonctionnels à haut poids moléculaires de polyéthers, polyesters, polycarbonates et polycaprolactones.

8. Procédé selon les revendications 1 à 7, caractérisé en ce que l'on effectue l'hydrolyse donnant les polyamines en une réaction continue.

**Claims**

1. A process for the production of polyamines containing aromatic primary amino groups by hydrolysis of compounds containing aromatic NCO groups in aqueous basic media, characterized in that

a) compounds containing aromatic NCO groups in a content of 0.5 to 40% by weight

are hydrolyzed in a single-stage process with

b) water in the presence of

c) at least one acyclic, cyclic or polycyclic compound containing at least one amidine and/or guanidine structural unit as catalysts in quantities of ≥0.001 part by weight per 100 parts by weight component a) and in the presence of

d) water-miscible aprotic dipolar solvents in quantities of ≥10 parts by weight per 100 parts by weight component a)

in substantially homogeneous phase at a temperature in the range from 20 to 210°C.

2. A process as claimed in claim 1, characterized in that diazabicycloalkenes, tetrahydropyrimidines and tetraalkyl guanidines are used.

3. A process as claimed in claims 1 and 2, characterized in that the catalysts c) are used in substantially dissolved form.

4. A process as claimed in claims 1 to 3, characterized in that the hydrolysis is carried out in the presence of water in 1 to 10 times the stoichiometric quantity, based on NCO.

5. A process as claimed in claims 1 to 4, characterized in that the hydrolysis is carried out in the presence of water-miscible solvents d) containing carboxylic acid dialkylamide, lactam, tetraalkyl urea, sulfone, sulfoxide, phosphorus dialkylamide groups with a boiling range of 56 to 250°C in quantities of ≥50 parts by weight d), based on 100 parts by weight a).

6. A process as claimed in claims 1 to 5, characterized in that the hydrolysis is carried out at temperatures of 75 to 135°C.

7. A process as claimed in claims 1 to 6, characterized in that NCO prepolymers containing 1.5 to 15% by weight aromatically bound NCO based on relatively high molecular weight difunctional or trifunctional polyether, polyester, polycarbonate and polycaprolactone polyols are used as the NCO compounds a).

8. A process as claimed in claims 1 to 7, characterized in that the hydrolysis to the polyamines is carried out in a continuous reaction.